# EUROPÄISCHE PATENTANMELDUNG

(11) **EP 1 495 958 A2**
(43) Veröffentlichungstag der Anmeldung: **12.01.2005**
(21) Anmeldenummer: 04014786.0
(22) Anmeldetag: 24.06.2004
(51) Int. Cl.: B62M 11/16, B62M 9/02, B62L 5/00, F16D 41/24

(54) **Naben-Gangschaltung für ein direkt angetriebenes Pedalfahrzeug**

(30) Priorität: 10.07.2003 DE 10331193; 22.07.2003 DE 10333151
(71) Anmelder: Schumacher, Manfred, 47877 Willich (DE)
(72) Erfinder: Schumacher, Manfred, 47877 Willich (DE)
(74) Vertreter: Habbel, Ludwig (Lutz), Dipl.-Ing.

(57) **Zusammenfassung**

Bei einer Naben-Gangschaltung für ein pedalbetriebenes Fahrzeug, mit je einem Gang für die Vorwärts- und für die Rückwärtsfahrt, und mit einer Rücktrittsbremse, welche einen mit spreizbaren Bremsbelägen zusammenwirkenden Bremskonus aufweist, sowie ein als Betätigungselement bezeichnetes Bauteil, welches eine Relativbewegung zwischen den Bremsbelägen und dem Bremskonus bewirkt, sowie eine am Fahrzeugrahmen festgelegte Bremsmomentenstütze, wobei die Bremsmomentenstütze über eine Freilaufeinrichtung an den Rahmen anschließt, schlägt die Erfindung vor, dass die Nabe von einer mit den Pedalen verbundenen Welle axial durchsetzt ist, und dass der Bremskonus mit der Freilaufeinrichtung verbunden und gegenüber der Welle in einer Drehrichtung beweglich ist, und dass das Betätigungselement drehfest mit der Welle verbunden ist.

## Beschreibung

Die Erfindung betrifft eine Naben-Gangschaltung nach dem Oberbegriff des Anspruchs 1.

Eine derartige Gangschaltung ist aus der DE 100 23 856 C2 bekannt.

Die bekannte Naben-Gangschaltung ist für die Ausgestaltung als Mehrgang-Schaltnabe konzipiert, beispielsweise als 3-, 5- oder 7-Gang-Nabe, wobei gemäß dem vorbekannten Stand der Technik jeder dieser Gänge sowohl für die Vorwärts- als auch für die Rückwärtsfahrt genutzt werden kann.

Bei diesen gattungsgemäßen Naben erfolgt der Antrieb über ein Ritzel mit Hilfe einer Antriebskette, so dass die um eine zentrale Achse umlaufende Nabenhülse durch das mit dieser Nabenhülse verbundene Antriebsritzel in Drehung versetzt wird. Auch aus der DE 297 22 656 U1 ist ein Fahrzeug bekannt, dessen Antrieb über Pedale und einen Kettentrieb erfolgt.

Im Unterschied zu dieser Antriebstechnik sind aus der Praxis jedoch auch so genannte "direkt angetriebene" Pedalfahrzeuge bekannt, beispielsweise als Dreiräder in Form von Kinder-Dreirädern oder auch in Form von Rehabilitationsfahrzeugen für Erwachsene. Bei derartigen Dreirädern erfolgt der Pedalantrieb unmittelbar auf das sowohl gelenkte als auch angetriebene Vorderrad. Als Direktantrieb wird dabei bezeichnet, dass ― häufig ohne Zwischenschaltung eines Getriebes ― die Drehbewegung der Pedale unmittelbar auf das Rad übertragen wird. Es kann beispielsweise vorgesehen sein, beide am Fahrzeug vorgesehene Pedalkurbeln durch eine einzige, durchlaufende und entsprechend mehrfach abgewinkelte Stange auszubilden, die in ihrem mittleren Abschnitt die das Rad durchquerende Antriebsachse bzw. -welle ausbildet. Diese Welle ist durch Verzahnung, Verstiftung oder ähnliche formschlüssige Maßnahmen mit dem Rad verbunden, welches beispielsweise als speichenloses Scheibenrad ausgestaltet sein kann.

Bei derartigen direkt angetriebenen Fahrzeugen besteht eine erhebliche Verletzungsgefahr dadurch, dass sich die Pedale aufgrund der drehfesten Verbindung zwischen Pedalen und Rad unabhängig von der Beinbewegung des Benutzers bewegen, solange das Fahrzeug rollt. Verletzungen im Bereich der Unterschenkel und Füße sind daher bei derartigen Fahrzeugen nicht unüblich.

Ein weiterer Nachteil derartiger Fahrzeuge besteht darin, dass die Bremsleistung dadurch aufgebracht werden muss, dass der Fahrer die Bewegung der Pedale durch entsprechenden Anlagedruck an den Pedalen zu behindern versucht und dabei das Vorderrad langsam abbremst. Die Effektivität dieser Bremsanordnung ist unbefriedigend. Eine zweite Bremseinrichtung muss daher zusätzlich vorgesehen werden, die manuell bedient wird und daher ― insbesondere bei den Kindern und Rehabilitanten als Fahrzeugbenutzern ― die Sicherheit der Fahrzeugführung beeinträchtigt, da zum Betätigen der zweiten Bremseinrichtung die Lenkeinrichtung notwendigerweise nicht mehr mit beiden Händen sicher umgriffen werden kann.

Durch Anordnung einer an sich bekannten Ein-Gang-Nabe mit Rücktrittbremse, wie sie aus beispielsweise dem Bereich der Fahrräder bekant ist, könnten die beiden vorgenannten Nachteile der direkt angetriebenen Pedalfahrzeuge ausgeräumt werden. Allerdings besteht ein Nachteil der Anwendung derartiger Ein-Gang-Naben bei den direkt angetriebenen Pedalfahrzeugen darin, dass die zuvor mittels der starren Pedalanbindung an das Rad vorhandene Rückwärts-Fahrfunktion nun entfällt und durch die Rücktritts-Bremsfunktion ersetzt ist. Insbesondere im Bereich der Rehabilitationsfahrzeuge kann dies einen erheblichen Nachteil darstellen, je nach Einschränkung der Bewegungsmöglichkeiten der Fahrzeugbenutzer.

Der Erfindung liegt die Aufgabe zugrunde, eine gattungsgemäße Naben-Gangschaltung dahingehend abzuwandeln, dass diese bei direkt angetriebenen Pedalfahrzeugen verwendbar ist. Weiterhin liegt der Erfindung die Aufgabe zugrunde, ein direkt angetriebenes Pedalfahrzeug zu schaffen, welches sowohl Vorwärtsals auch Rückwärtsfahrt sowie eine Rücktrittsbremsfunktion ermöglicht und somit besonders komfortabel sowie besonders unfallsicher benutzbar ist.

Diese Aufgabe wird durch eine Naben-Gangschaltung mit den Merkmalen des Anspruchs 1 gelöst sowie durch ein Fahrzeug mit den Merkmalen des Anspruchs 8.

Die Erfindung schlägt mit anderen Worten vor, die Vorteile der bekannten, gattungsgemäßen Naben-Gangschaltung auch bei einer Nabenausgestaltung zu ermöglichen, bei der die zentrale Welle innerhalb der Nabe nicht feststeht, sondern drehbar angeordnet ist. Die gattungsgemäße Konstruktion einer Naben-Gangschaltung kann für derartige Anwendungsfälle nicht genutzt werden, da sie für feststehende Achsen vorgesehen ist, die beispielsweise mit dem Fahrzeugrahmen verschraubt sind. Demgegenüber schlägt die Erfindung vor, eine drehbare Welle anstelle der zentralen, feststehenden Achse in der Nabe vorzusehen, wobei diese Welle mit den Pedalen verbunden ist.

Die Rücktrittsbremse weist einen Bremskonus auf, der sich wahlweise mit der zentralen Welle mitdreht oder gegenüber dieser frei drehbeweglich ist. Diese Drehbeweglichkeit des Bremskonus gegenüber der Welle wird ermöglicht oder verhindert durch eine in nur einer Drehrichtung wirksame Freilaufeinrichtung, so dass in Abhängigkeit von der Relativbewegung zwischen Nabenhülse und Welle eine Bremswirkung mittels des Bremskonus möglich ist oder eine Rückwärts-Fahrfunktion ermöglicht wird, bei welcher die Welle durch den noch in seiner Bremsfunktion befindlichen Bremskonus und die zugehörigen Bremsklötze eine Drehbewegung auf die Nabenhülse überträgt, so dass mittels der Nabenhülse das Rad rückwärts gedreht wird.

Wenn die Nabe an einem kettengetriebenen Fahrzeug verwendet wird, läuft die von den Pedalen angetriebene Kette um ein Ritzel um. Serienmäßig wird daher die zum Bremsen erforderliche Relativbewegung zwischen Bremsbelägen und Bremskonus über das Ritzel in die Nabe eingeleitet. Aus der Praxis ist es bekannt, als Betätigungselement eine Getriebeschnecke zu verwenden, die gemeinsam mit dem Ritzel um die feststehende Achse umläuft. Die Getriebeschnecke ist als Betätigungselement bezeichnet, weil sie ― wenn die Getriebeschnecke gegenüber der Nabenhülse rückwärts gedreht wird ― mittels der Schneckenverzahnung eine axiale Relativbewegung zwischen den Bremsbelägen und dem Bremskonus bewirkt und damit die Bremsung einleitet. Für den Einsatz der Nabe bei einem direktangetriebenen Fahrzeug, bei dem die Pedale auf eine zentrale Welle des Rades einwirken, also auf eine Welle, welche sich axial durch die Nabe erstreckt, sieht die Erfindung in Abweichung von dieser serienmäßigen Ausgestaltung weiterhin vor, dass das diese Relativbewegung auslösende Betätigungselement ― wie die erwähnte Getriebeschnecke ― drehfest mit der Welle verbunden ist.

Die Freilaufeinrichtung kann vorzugsweise als Freilaufritzel ausgestaltet sein. Hierdurch können handelsübliche und durch große Stückzahlen preisgünstige Bauteile Verwendung finden.

Weiterhin kann vorteilhaft die Freilaufeinrichtung, insbesondere ein Freilaufritzel, durch eine Friktionsbremse bewusst schwergängig eingestellt sein. Hierdurch ist sichergestellt, dass nach dem Abbremsen mittels der Rücktritts-Bremsfunktion die Bremsklötze noch der Nabenhülse anliegen, wenn anschließend durch weitere Rückwärtsbelastung der Pedale die Rückwärts-Fahrfunktion eingeleitet wird und die Kraft über die Bremsklötze auf die Nabenhülse übertragen wird.

Vorteilhaft kann bei einer bekannten und handelsüblichen Ein-Gang-Nabe, wo die Welle mit einem Gewinde versehen ist, der Bremskonus nicht unmittelbar auf dieser Welle angeordnet sein, sondern auf einer Gleitbuchse drehbeweglich gelagert sein, welche Gleitbuchse ihrerseits mit der Welle verbunden ist. Es ist daher vorgesehen, gegenüber der serienmäßigen Ausgestaltung des Bremskonus dessen Innendurchmesser zu vergrößern, wobei das Gewinde entfällt, mittels welches der Bremskonus ansonsten üblicherweise mit der Welle verschraubt ist. Stattdessen wird der Bremskonus auf der Gleitbuchse gelagert, welche ihrerseits mit der Welle verschraubt ist. Auf diese Weise ist sichergestellt, dass in der einen, gewünschten Drehrichtung der Bremskonus im Verhältnis zur Welle drehbeweglich ist, während in der anderen Drehrichtung, bedingt durch die Freilaufeinrichtung, der Bremskonus gemeinsam mit der Welle gedreht wird, nämlich bei der Rückwärtsfahrt.

Um einen möglichst seriennahen Bremskonus zu verwenden, beispielsweise durch einfache Nachbearbeitung des serienmäßig vorgesehenen Bremskonus, und um andererseits ein serienmäßiges und dementsprechend preisgünstiges Freilaufritzel verwenden zu können, kann vorteilhaft ein Adapter vorgesehen sein, mittels dessen der Bremskonus drehfest mit dem Freilaufritzel verbunden werden kann.

Ein derartiger Adapter kann vorzugsweise einen inneren Freiraum zur Aufnahme eines Axiallagers aufweisen, so dass die gesamte Baueinheit bestehend aus Freilaufritzel, Adapter und Bremskonus mittels dieses Axiallagers in einer bestimmten axialen Position gehalten werden können. Hierzu kann vorteilhaft die Gleitbuchse einen Kragen aufweisen, mit welchem sie dem Axiallager anliegt. Durch die Gewindeverbindung zwischen der Gleitbuchse und der Welle kann auf einfache Weise der Bremskonus und das damit verbundene Freilaufritzel axial positioniert werden.

Vorteilhaft kann ein direkt angetriebenes Pedalfahrzeug mit einer derartigen Naben-Gangschaltung ausgestattet werden, insbesondere Fahrzeuge mit mehr als zwei Rädern, so dass bei derartigen Fahrzeugen sowohl die Rückwärts- als auch die Vorwärtsfahrt ermöglicht ist, dies bei Anwendung einer Freilauffunktion, wie sie durch die Ein-Gang-Nabe vorgesehen ist, so dass entsprechende Verletzungen bei nicht angetriebenem, aber rollendem Fahrzeug reduziert werden, und wobei eine Rückfahrfunktion die Manövrierbarkeit des Fahrzeugs verbessert.

Ein Ausführungsbeispiel der Erfindung wird anhand der Zeichnungen nachfolgend näher erläutert. Dabei zeigt
- Fig. 1: in rein schematischer Anordnung eine Ein-Gang-Nabe, die in einem direkt angetriebenem Fahrzeug eingebaut ist, und die
- Fig. 2 - 6: einige Schritte bei der Umrüstung einer serienmäßigen Ein-Gang-Nabe zu einer erfindungsgemäßen Naben-Gangschaltung.

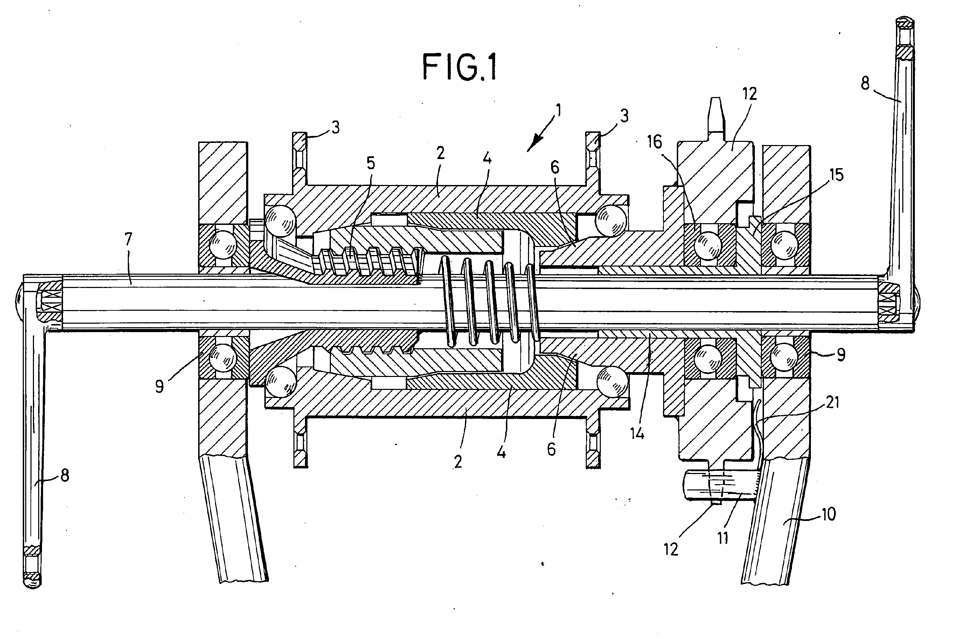

In Fig. 1 ist mit 1 allgemein eine Nabe bezeichnet, die als Ein-Gang-Nabe mit Rücktrittsfunktion im Wesentlichen handelsüblich ist. Eine Nabenhülse 2 weist zwei Speichenflansche 3 auf, so dass die Nabe 1 in einem Drahtspeichenrad verbaut werden kann. Alternativ kann jedoch vorgesehen sein, einen der beiden Speichenflansche 3 der üblicherweise lediglich mit der Nabenhülse 2 verpresst ist, von der Nabenhülse 2 abzuziehen und die Nabe 1 in die zentrale Ausnehmung eines Scheibenrades zu stecken. Anschließend wird der zuvor demontierte Speichenflansch 3 wieder mit der Nabenhülse 2 verpresst. Die Speichenlöcher in den Speichenflanschen 3 können nun dazu dienen, die Nabe 1 drehfest mit dem Scheibenrad zu verbinden, beispielsweise mit Hilfe von entsprechenden Schrauben, die durch die Speichenflansche 3 geführt und in das Scheibenrad eingeschraubt werden.

Die Nabe 1 weist weiterhin Bremsklötze 4 auf. Diese können mittels eines Betätigungselementes in Form einer Gewindeschnecke 5 axial innerhalb der Nabenhülse 2 verschoben werden. Das die Gewindeschnecke 5 aufweisende Bauteil ist serienmäßig mit einem Ritzel verbunden, welches mit einer Antriebskette des Fahrzeugs zusammenwirkt. Gemeinsam mit diesem Ritzel dreht sich serienmäßig das Schneckenbauteil um eine Achse, welche drehfest im Rahmen eines Fahrzeugs montiert ist und durch die Nabe verläuft. Bei dem dargestellten Ausführungsbeispiel ist das Schneckenbauteil um den Bereich gekürzt, welcher serienmäßig mit dem Ritzel verbunden wäre, und mit einer drehbaren Welle 7 verschweißt, so dass sich die Gewindeschnecke 5 und die Welle 7 gemeinsam drehen. Die Gewindeschnecke 5 kann abweichend von dem dargestellten Ausführungsbeispiel auch auf andere Weise fest mit der Welle 7 verbunden sein, z. B. können die Gewindeschnecke 5 und die Welle 7 miteinander verzahnt, verstiftet oder von vornherein als ein einziges Bauteil hergestellt sein. Wenn die Bremsklötze 4 durch die Gewindeschnecke 5 axial verschoben werden, laufen sie auf einen Bremskonus 6 auf, werden gespreizt und führen so zu einer Reibung mit der Nabenhülse 2.

Die Nabe 1 wird axial von der Welle 7 durchsetzt, die an ihren beiden Enden jeweils mit einer Pedalkurbel 8 versehen ist. Die Welle 7 ist mittels zweier Lager 9 in einem Rahmen 10 eines Fahrzeugs gelagert, beispielsweise in der Vorderradgabel eines Dreirad-Fahrzeugs. Wenn die Pedalkurbeln 8 und dementsprechend die Welle 7 für eine Vorwärtsfahrt dieses Fahrzeugs in Drehung versetzt werden, wird die Nabenhülse 2 mit gleicher Geschwindigkeit mitgenommen und versetzt über die Speichenflansche 3 das entsprechende Rad des Fahrzeugs in Drehung.

Die Freilauf- und Rücktritts-Bremsfunktionen der Nabe 1 sind nach wie vor erfüllt.

Für die Rücktritts-Bremsfunktion ist wichtig, dass die Drehmomentenabstützung gegenüber dem Rahmen 10 erfolgt. Zu diesem Zweck ist am Rahmen eine stiftartige Bremsmomentenstütze 11 vorgesehen, welche sich in die Verzahnung eines Freilaufritzels 12 erstreckt. Das Freilaufritzel 12 ist seinerseits drehfest mit dem Bremskonus 6 verbunden. Während des Bremsvorganges besteht eine Relativbewegung zwischen der sich ― mit nachlassender Geschwindigkeit ― drehenden Nabenhülse 2 und der Welle 7. Sobald das Fahrzeug zum Stillstand gekommen ist, ist diese Relativbewegung beendet, die Bremsklötze 4 befinden sich jedoch noch in ihrer Bremsstellung und liegen der Nabenhülse 2 an.

Zum Bremsen werden die Pedale und dementsprechend die Welle 7 in eine Richtung beaufschlagt und geringfügig bewegt, welche der Vorwärts-Drehrichtung dieser Bauteile entgegengesetzt ist. Nach Fahrzeugstillstand führt die weitere, gleichartige Belastung der Pedalkurbeln 8 zu einer dementsprechend rückwärtsgerichteten Drehbewegung der Welle 7, welche aufgrund in ihrer Bremsstellung befindlichen Bremsklötze 4 dazu führt, dass auch die Nabenhülse 2 und dementsprechend über die Speichenflansche 3 auch das gesamte Rad in dieser Rückwärts-Drehrichtung bewegt wird. Da die beim Bremsen zuvor beschriebene Relativbewegung zwischen der Nabenhülse 2 und der Welle 7 nicht mehr besteht, sondern beide Bauteile mit gleicher Winkelgeschwindigkeit bewegt werden, ermöglicht das Freilaufritzel 12 durch seine Freilauffunktion diese Bewegungsrichtung, die einer Rückwärtsfahrt des Fahrzeugs entspricht.

Zwischen dem Bremskonus 6 und der Welle 7 ist eine Gleitbuchse 14 vorgesehen, die an ihrem in der Zeichnung rechts dargestellten Ende einen Kragen 15 aufweist. Mit diesem Kragen 15 liegt die Gleitbuchse 14 einem Axiallager 16 an, welches seinerseits auf den Bremskonus 6 einwirkt, so dass dieser axial fixiert ist.

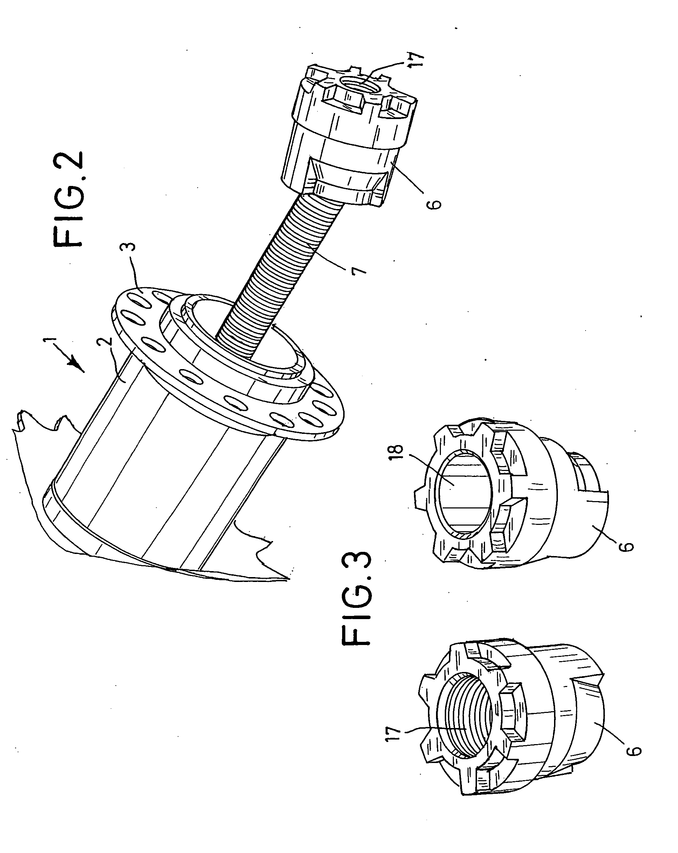

Während in Fig. 1 eine rein schematische Darstellung der Nabe 1 vorgesehen ist, zeigt Fig. 2 eine teilweise demontierte Nabe 1 aus der Praxis. Die Welle 7 ist als Gewindestange ausgestaltet und der Bremskonus 6 weist ein Innengewinde 17 auf, mit welchem er auf die Welle 7 geschraubt wird, wobei in der dargestellten Demontagestellung der Bremskonus 6 von der Welle 7 abgeschraubt ist.

Fig. 3 zeigt im Vergleich zwei Bremskonen 6, wobei links der serienmäßige Zustand mit Innengewinde 17 dargestellt ist und rechts eine überarbeitete Ausführung des Bremskonus 6, bei dem eine zentrale Bohrung 18 vorgesehen ist, die gegenüber dem serienmäßigen Zustand des Bremskonus 6 nicht nur gewindelos ist, sondern auch einen größeren Innendurchmesser aufweist als die mit dem Innengewinde 17 versehene serienmäßige Axialbohrung.

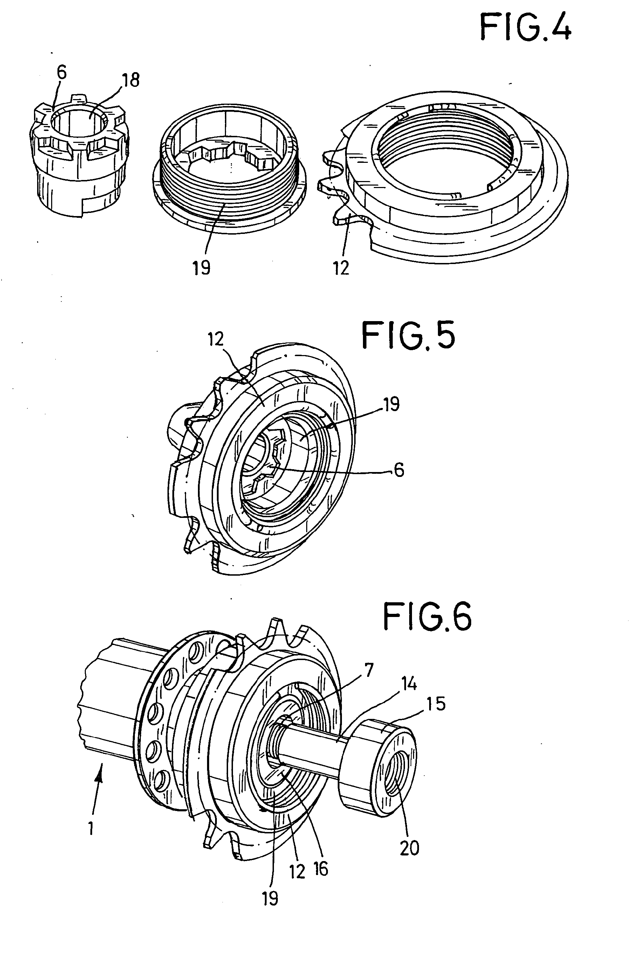

Fig. 4 zeigt den erfindungsgemäß überarbeiteten Bremskonus 6 neben einem großserienmäßig hergestellten handelsüblichen Freilaufritzel 12. Zur Verbindung des Bremskonus 6 mit dem Freilaufritzel 12 ist ein Adapter 19 vorgesehen, der einerseits eine formschlüssige Aufnahme des Bremskonus 6 ermöglicht und andererseits ein Außengewinde aufweist, mit welchem er in das ein Innengewinde aufweisende Freilaufritzel 12 eingeschraubt werden kann.

Fig. 5 zeigt die entsprechende Baugruppe, die aus den drei miteinander verbundenen Bauteilen 6, 12 und 19 besteht, wie sie zuvor einzeln in Fig. 4 dargestellt waren. Es ist ersichtlich, dass der vergleichsweise große freie Innenraum des Freilaufritzels 12 durch den Adapter 19 nur teilweise ausgefüllt ist, und dass der Adapter 19 seinerseits einen großen freien Innenraum aufweist.

Fig. 6 zeigt die Baugruppe der Fig. 5 während des Anbaus an die in Fig. 2 dargestellte Nabe 1. In den Freiraum des Adapters 19 ist ein Axiallager 16 eingesetzt und sowohl das Axiallager 16 als auch der Bremskonus 6 weisen eine so große zentrale Bohrung auf, dass ein ringförmiger Spalt zwischen der Welle 7 und dem Bremskonus 6 bzw. dem Axiallager 16 verbleibt. Dieser Ringspalt wird ausgefüllt durch eine Gleitbuchse 14, welche ein Innengewinde 20 zum Zusammenwirken mit dem Gewinde der Welle 7 aufweist. Die Gleitbuchse 14 liegt mit ihrem Kragen 15 dem Axiallager 16 an, wenn sie entsprechend weit auf die Welle 7 aufgeschraubt wurde, so dass auf diese Weise das Lagerspiel innerhalb der Nabe 1 eingestellt werden kann und der gewünschte axiale Sitz des Bremskonus 6 auf der Welle 7 bestimmt werden kann.

In Fig. 1 ist schematisch eine Friktionsbremse 21 eingedeutet, die als Federstahldraht, Federblechzunge oder ähnlich ausgestaltet dem Freilaufritzel 12 anliegt, um dessen Beweglichkeit zu beschränken. Auf diese Weise wird sichergestellt, dass die Bremsklötze 4 nach Beendigung des Bremsvorganges und vor Einleiten der Rückwärtsfahrt nicht versehentlich, den Kraftfluss zwischen Welle 7 und Nabenhülsen 2 unterbrechend, in ihre Ruhestellung zurückbewegt werden, sondern vielmehr in ihrer Bremsstellung, der Nabenhülse 2 anliegend, verbleiben.

## Patentansprüche

1. Naben-Gangschaltung für ein pedalbetriebenes Fahrzeug, mit je einem Gang für die Vorwärts- und für die Rückwärtsfahrt,
und mit einer Rücktrittsbremse,
welche einen mit spreizbaren Bremsbelägen zusammenwirkenden Bremskonus aufweist
sowie ein als Betätigungselement bezeichnetes Bauteil, welches eine Relativbewegung zwischen den Bremsbelägen und dem Bremskonus bewirkt,
sowie eine am Fahrzeugrahmen festgelegte Bremsmomentenstütze,
wobei die Bremsmomentenstütze über eine Freilaufeinrichtung an den Rahmen anschließt,
**dadurch gekennzeichnet,**
**dass** die Nabe (1) von einer mit den Pedalen verbundenen Welle (7) axial durchsetzt ist
und **dass** der Bremskonus (6) drehfest mit der Freilaufeinrichtung verbunden und gegenüber der Welle (7) in einer Drehrichtung, nämlich bei Vorwärtsfahrt des Fahrzeugs, beweglich ist
und **dass** das Betätigungselement (5) drehfest mit der Welle (7) verbunden ist.

2. Naben-Gangschaltung nach Anspruch 1,
**dadurch gekennzeichnet,**
**dass** die Freilaufeinrichtung durch ein Freilaufritzel (12) gebildet ist.

3. Naben-Gangschaltung nach Anspruch 2,
**dadurch gekennzeichnet,**
**dass** eine Friktionsbremse (21) vorgesehen ist, welche dem Freilaufritzel (12) anliegt und dessen Beweglichkeit erschwert.

4. Vorrichtung nach einem der vorhergehenden Ansprüche,
**dadurch gekennzeichnet,**
**dass** die Welle (7) mit einem Gewinde versehen ist, und dass der Bremskonus (6) auf einer mit der Welle (7) verschraubten Gleitbuchse (14) drehbeweglich gelagert ist.

5. Naben-Gangschaltung nach einem der Ansprüche 2 - 4,
**dadurch gekennzeichnet,**
**dass** der Bremskonus (6) mittels eines Adapters (19) drehfest mit dem Freilaufritzel (12) verbunden ist,
derart, dass der Adapter (19) ein Außengewinde aufweist, welches in ein Innengewinde des Freilaufritzels (12) einschraubbar ist,
wobei der Adapter (19) weiterhin eine den Bremskonus (6) drehfest aufnehmende Aufnahme aufweist.

6. Naben-Gangschaltung nach Anspruch 5,
**dadurch gekennzeichnet,**
**dass** der Adapter (19) einen zentralen Hohlraum aufweist, in welchem ein Axiallager (16) angeordnet ist.

7. Naben-Gangschaltung nach Anspruch 4,
**dadurch gekennzeichnet,**
**dass** die Gleitbuchse (14) einen Kragen aufweist, zur wirksamen axialen Festlegung des Bremskonus (6).

8. Direkt angetriebenes Pedalfahrzeug,
**gekennzeichnet durch**
eine Naben-Gangschaltung nach einem der vorhergehenden Ansprüche.
